(19) Europäisches Patentamt
European Patent Office
Office européen des brevets

(11) **EP 4 246 382 A1**

(12) **EUROPEAN PATENT APPLICATION**

(43) Date of publication:
**20.09.2023   Bulletin 2023/38**

(51) International Patent Classification (IPC):
**G06N 10/20** $^{(2022.01)}$     **G06N 10/70** $^{(2022.01)}$

(21) Application number: **22305305.9**

(52) Cooperative Patent Classification (CPC):
**G06N 10/20; G06N 10/70**

(22) Date of filing: **16.03.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BULL SAS**
**78340 Les Clayes-sous-Bois (FR)**

(72) Inventors:
• **GAZDA, Arnaud**
  **78000 VERSAILLES (FR)**
• **MARTIEL, Simon**
  **78000 VERSAILLES (FR)**
• **OILLARBURU, Jon**
  **64640 SAINT MARTIN D'ARBEROUE (FR)**

(74) Representative: **Plasseraud IP**
  **66, rue de la Chaussée d'Antin**
  **75440 Paris Cedex 09 (FR)**

(54) **COMPILATION TECHNIQUE FOR SURFACE CODE ARCHITECTURE**

(57)     Method for implementing a graph (G) comprising a plurality of vertices (V) and links (E) between the vertices, a set (R) being a collection of subsets (Ri) of said a given number of vertices (Rik)comprising:
- in said set (R), selecting subsets (Ri, Rj), called pre-selected subsets, such that a tree (Ti, Tj) is associated respectively to said tree (Ti, Tj), said associated trees (Ti, Tj) being pairwise disjoint;
- comparing the number of vertices (Rik) associated to each of the pre-selected subset,
- among the pre-selected subsets, choosing the subset for which the number of vertices is the highest

[Fig. 2]

FIG. 2

EP 4 246 382 A1

**Description**

Quantum computing has been developing recently as it gives promising hopes to solve problems that are classically intractable.

One of the challenges that faces quantum computing is that it needs manipulating a large amount of qubits beyond their coherence time, thus requiring error corrections. In particular, to store and manipulate quantum information on large time scales, it is known to actively correct errors by combining physical qubits into logical qubits using a quantum error correcting code such as surface code architecture.

**Summary**

This disclosure ensures an optimization of implementing of the quantum circuit for said surface code architecture. More generally, the present disclosure aims at reducing calculation time when implementing an algorithm.

It is proposed a method for implementing a Method for implementing a graph (G) comprising a plurality of vertices (V) and links (E) between the vertices, a set (R) being a collection of subsets (Ri) of said a given number of vertices (Rik). The method comprises:

- in said set (R), selecting subsets (Ri, Rj), called pre-selected subsets, such that a tree (Ti, Tj) is associated respectively to said subset (Ri, Rj), said associated trees (Ti, Tj) being pairwise disjoint;

- comparing the number of vertices (Rik) associated to each of the pre-selected subset;

- among the pre-selected subsets, choosing the subset for which the number of vertices is the highest.

The method ensures reducing calculation time.

According to another aspect, the graph is a tree.

According to another aspect, the method comprises depth first research of each tree to select said preselected subset.

According to another aspect, during the depth first research, a given vertex of one of the tree is visited, a partial solution comprising a set of rotations Ri that we were able to constitute up to the visited vertex and a set of vertices that are still accessible.

The disclosure is also about a method for implementing a quantum circuit comprising a plurality of qubits as well as operators executed on said qubits, said operators comprising a sequence of $\frac{\pi}{4}$ Pauli rotation gates, a surface code layout comprising an arrangement of said quantum circuit on a quantum chip, the arrangement comprising at least a tree with a plurality of subtrees, at each rotation gate corresponding a subtree of the tree, the method comprising:

- generating iteratively a directed acyclic graph of said quantum circuit, a front layer of the DAG being a set of rotations that can be effectively implemented at each iteration,

- selecting in said front layer of the DAG a subset, called selected subset, of said set of rotations among subsets, called non intersecting subsets, in which the subtrees are arranged not to intersect by applying the method of implementing a graph as previously described.

According to another aspect, the method comprises removing the selected subset of rotations from the DAG.

According to another aspect, the method comprises stopping generating the DAG when the front layer is empty.

**Brief Description of Drawings**

Other features, details and advantages will be shown in the following detailed description and on the figures, on which:

**Fig. 1**

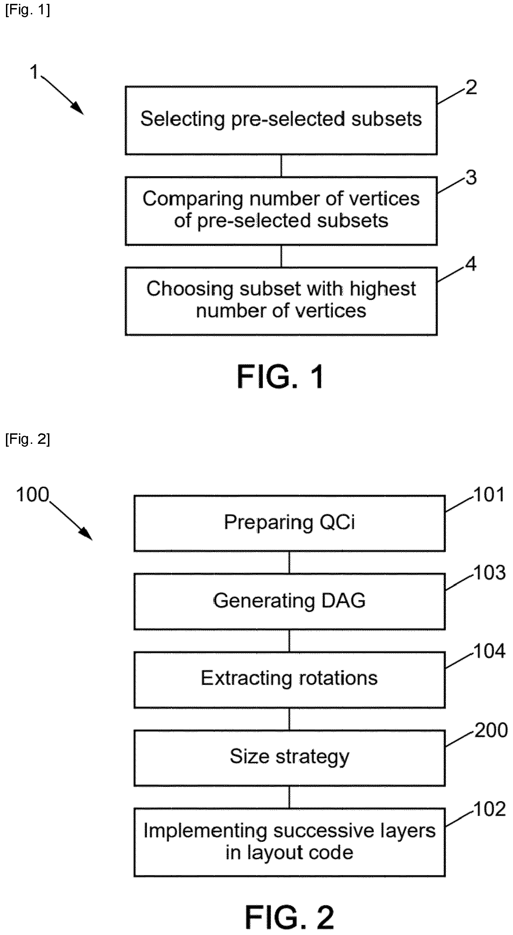

[Fig. 1] is a view of a flowchart of a method according to the present disclosure. an embodiment of the present disclosure.

**Fig. 2**
[Fig. 2] is a view of a flowchart of an application of the method of figure 1.

**Fig. 3**

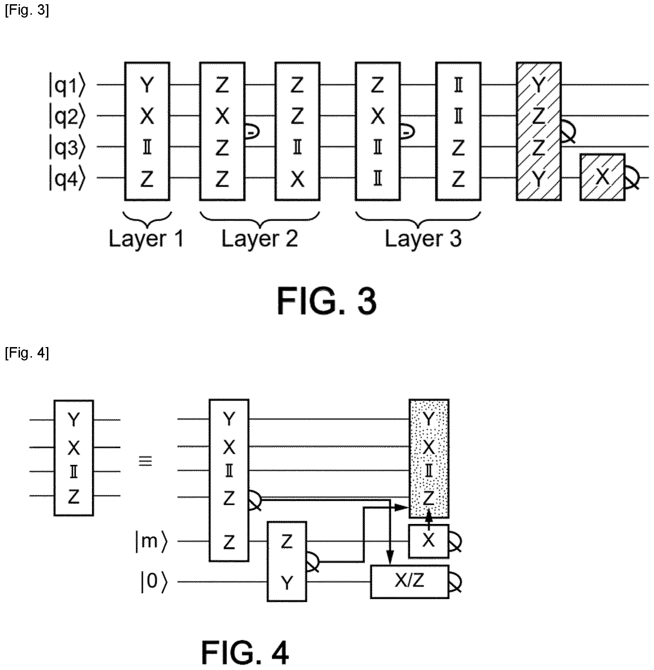

[Fig. 3] is a view of an example of a quantum circuit.

**Fig. 4**
[Fig. 4] is a view of an example of a T gate implementation.

**Fig. 5**

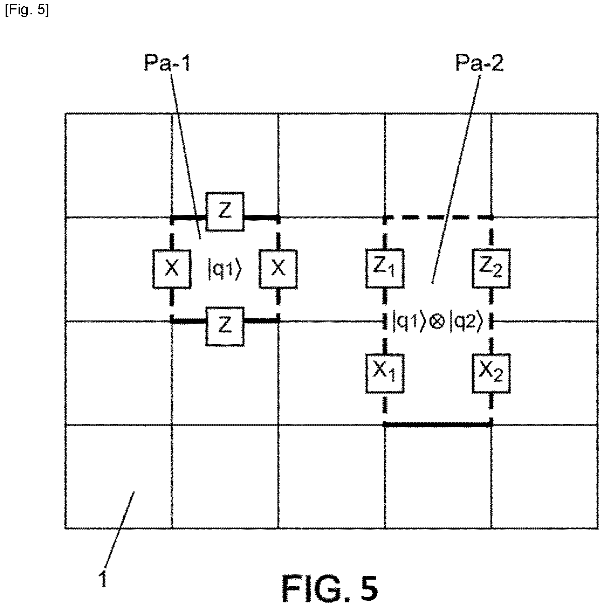

[Fig. 5] is a view of a representation of a one-qubit patch and a two-qubit patch.

**Fig. 6**

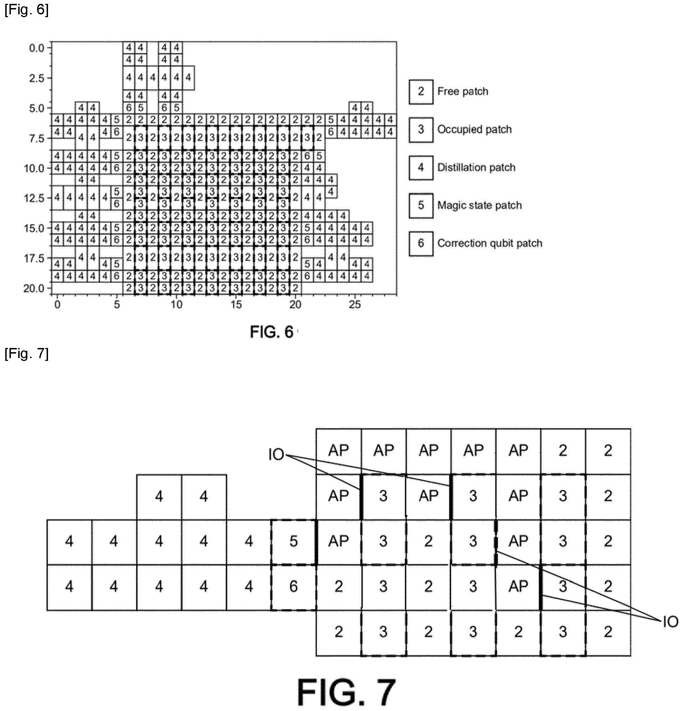

[Fig. 6] is a view of a resulting layout.

**Fig. 7**
[Fig. 7] is a view of an implementation of a joint measurement.

**Fig. 8**

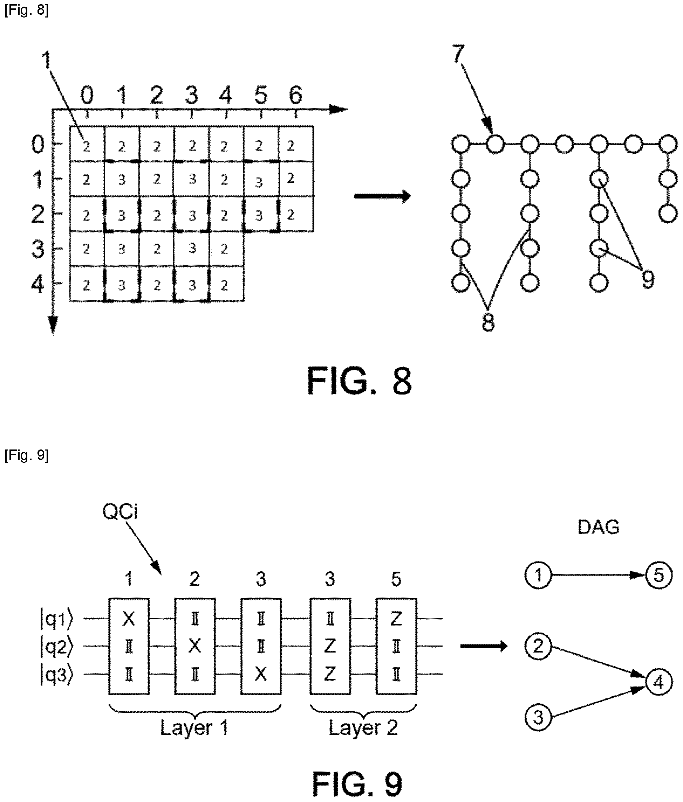

[Fig. 8] is a view of a conversion of free tiles layout of figure 6 into a tree.

**Fig. 9**
[Fig. 9] is view of an example of a directed acyclic graph generated by the method of figure 2.

**Fig. 10**

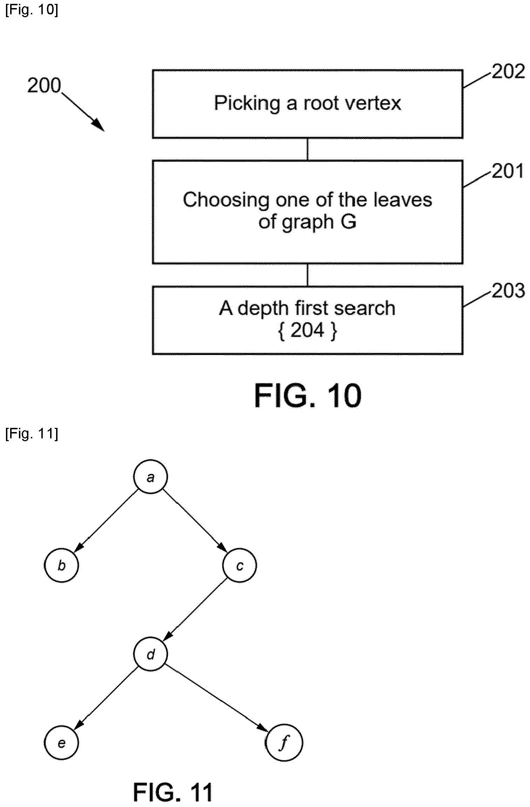

[Fig. 10] is a flowchart of a size strategy method of the method of figure 2.

**Fig. 11**
[Fig. 11] is an example of a tree on which the size strategy method of figure 10 can be applied.

## Description of Embodiments

As can be seen from figure 1, the present invention is about a method 1 for implementing a graph G comprising a plurality of vertices V and links E between the vertices, a set R being a collection of subsets Ri of said a given number of vertices Rik comprising, in said set R, selecting (step 2) subsets Ri, Rj, called pre-selected subsets, such that a tree Ti, Tj is associated respectively to said tree Ti, Tj, said associated trees Ti, Tj being pairwise disjoint.

The method also 1 comprises comparing (step 3) the number of vertices Rik associated to each of the pre-selected subset. The method 1 furthermore comprises (step 4), among the pre-selected subsets, choosing the subset for which the number of vertices is the highest.

The method 1 can apply to maximizing a number of tasks to be performed in parallel on a calculating cluster, ensuring minimizing of the calculation time.

The method 1 is now detailed in its application to a method, referenced 100 in the figures, for implementing a quantum circuit Qci, preferably with as few time steps as possible, i.e., with a high speed process, the number of steps that are required to implement the circuit QCi giving the measure of the process speed.

As can be seen from figure 2, the method 100 comprises a step 101 that prepares the quantum circuit QCi as a sequence of Clifford and T gates (or Pauli π/4 rotation). Preferably, given that the Clifford gates can commute to the end of the circuit, a resulting circuit is of the form of a sequence of a plurality of T gates followed by some Pauli measurements of the qubits. In figure 3, the rotations 2 are indicated by layers 1, 2 and 3 while the Pauli joint measurements are indicated by the hatched area.

The method also comprises a step 102 of implementing the T gates, this step being the costliest step of the method. The step 102 consists in performing a series of joint measurements JM, consuming one magic state, or ancilla, as seen from on figure 4, wherein the arrows show that the result of the measurement is used to process a result of the next measurement and the dotted area is a regular Pauli gate. The method can also comprise a step of distillation to produce said magic state. As known, a magic state reads: $|m\rangle = |0\rangle + e^{i\pi/4}|1\rangle$.

Details now are given about how to perform the joint measurements.

To do so, the method 100 further comprises encoding the surface code thanks to a plurality of patches Pa. As seen from figures 5 and 6, a board 1 is partitioned into a grid of tiles. The tiles are used to host said patches, each of which tiles being a representation of a qubit. The patches can be either one-qubit or two-qubit patches.

A one-qubit patch Pa-1 represents one qubit and is delimited by four edges, each edge being coupled to a Pauli operator. On figure 6, the two dashed edges stand for X operators and the two solid edges stand for Z operators. A two-qubit patch Pa-2 represents two qubits. The two-qubit patch comprises six edges. On figure 6, the three dashed lines stand for X operators and the three solid edges stand for Z operators.

As shown in figure 6, a resulting layout comprises occupied patches 2, free patches 3, distillation patches 4, magic state patches 5 and correction qubit patches 6. Such layout is known from document "A game of surface codes" (2019) by D. Litinsky.

As can be seen from figure 7, the joint measurement is implemented by initializing an ancilla patch 5 on free tiles 3 that hits every operator involved in the measurement. On this figure, the Pauli operators that are involved are referenced to as IO (for involved operators) and the ancilla patch is referenced to as AP. Regarding the process speed measure, the joint measurement costs one time step.

The method 100 comprises of converting the free tiles layout into a tree 7. As can be seen from figure 8, the tree 7 comprises rods 8 corresponding to the free tiles 3 and nodes 9 corresponding to the information of which gate can be reached. The tree 7 is composed of a plurality of subtrees, some intersecting and some not intersecting. Two subtrees of the graph that do not intersect correspond to two ancillas not intersecting.

The method 100 aims at finding the not intersecting subtrees. Said differently, a subtree spanning all vertices of rotation $R_i$ being noted $\tau(R_i)$, a valid decomposition D reads: $D = \{\tau(R_{i1}),...,\tau(R_{im})| \forall j \neq k, \tau(R_{ij}) \cap \tau(R_{ik}) = 0\}$.

To construct the valid decomposition D, the method 100 comprises a process 200 referred to as size strategy 200.

The size strategy consists in selecting the decomposition D that maximizes the number of rotations involved to increase parallelizing of the computation. The size strategy 200 represents an embodiment of the method 1 of figure 1.

The method 100 comprises a preprocess 103 of generating iteratively a directed acyclic graph (DAG) of the quantum circuit Qci.

Figure 9 shows an example of a quantum circuit QCi with the rotations to implement as a DAG. As can be seen, layer 1 comprises T gates 1, 2 and 3 while layer 2 comprises T gates 4 and 5. A link (arrow) symbolizes that rotations 1 and 5 cannot commute, as well as rotations 2 and 3 with 4.

A front layer FL of a given iteration of the DAG can be expressed as the set of rotations that can be effectively implemented in said given step. And, at each iteration, the effectively implemented rotations are removed from the DAG.

As can be seen from figure 9, the front layer FL, comprises rotations 1, 2, and 3.

From the front layer FL, rotations among 1, 2 and 3 are to be selected by a heuristic, as will be detailed later in relation with process 200. If, firstly, rotations 2 and 3 are implemented in one time step, then the front layer comprises only rotations, or nodes, 1 and 4. Then, rotations 1 and 4 can be implemented in one time step, resulting in the remaining front layer FL of figure that comprises node 5 only.

The method 100 also comprises selecting (step 104) in the front layer FL of the DAG a subset of the set of rotations in which the subtrees are arranged not to intersect. In other words, one can iteratively call the process 200 on the front layer of the DAG. The rotations chosen by the process 200 are then removed from the DAG, and the method stops when the DAG is empty.

Thus, the method 100 ensures minimizing the number of time steps that are needed to implement one layer or commuting rotations, by selecting the largest possible group of commuting rotations to implement or the largest possible group of qubits involved.

Chronologically speaking, the step 101 of preparing the quantum circuit QCi precedes generating the DAG (step 103) and extracting (step 104) the rotations that can be implemented, layer by layer, from the DAG as long as the DAG is not empty, as explained above. Then, the T gates are implemented (step 102).

We now detail the size strategy method 200.

The size strategy method is preferably a dynamic recursive method.

The size strategy method 200 proceeds by subdividing the problem into sub-problems and by recombining optimally the solutions to the subproblems into a solution for the initial problem.

The graph, noted G, is a set of points V called vertices or nodes, linked by a set E of edges, such that $G=(V, E)$.

A set R comprises a collection of subsets Ri of vertices of the graph G, $R = \{R1, ..., Rk\}$, $Ri \subseteq V$. The size strategy method applies advantageously to the rotations of the front layer FL of the DAG, though the method 200 is not limited to this application.

The size strategy method comprises a step of visiting the graph G so as to obtain the largest possible collection of m subsets $Ri1, ..., Rim \in R$ such that for all rotations Ri in this collection, there exists an associated tree Ti connecting the vertices of Ri such that these trees are pairwise disjoints $\forall i,j$, $Ti \cap Tj = \emptyset$.

G being a tree, the method 200 comprises (see figure 10) a starting step 201 of choosing one of the leaves of the graph G, the leaves being vertices that have no child.

The method 200 advantageously comprises a preliminary step 202 of picking a root vertex $r \in V$ (step 302), even though this choice has no influence on the result of the method 200, such that any vertex can be picked. Once this vertex is picked each vertex of G has a single parent vertex and several (possible none) children vertices. The leaves of the tree are the vertices with no child.

Then, the method 200 comprises a depth first search 203 of the tree from the leave that has been selected in step 201. The search 203 comprises visiting all the graph G by visiting all the children of a vertex before visiting said vertex.

Upon visiting a given vertex v of the tree (step 204), a solution, that is partial, is produced, associated to said vertex, using solutions already associated to each of its (already visited) children. These solutions contain two kinds of information, namely a solution set Pv and accessible vertices Mv.

The solution set Pv comprises the rotations Ri that we were able to constitute up to the vertex, meaning all the vertices in the subtree under the vertex, away from the root. And Mv comprises all the vertices that are still accessible, meaning all the vertices that are not part of the solution set Pv and are in between the visited vertex v and the other vertices of the solution set Pv.

Said differently, the collection of the children of the visited vertex v being noted (Pc, Mc), then the solution (Pv, Mv) of step 204 comprises computing the set of accessible vertices $Mv=\{v\} \cup Mc$, computing the solution set $Pv= \cup Pc$, and, updating the solution (Pv, Mv) such that, if Mv contains some rotations that can be implemented Ri, then Mv becomes empty set: $Mv \leftarrow \emptyset$ and Pv comprises the preceding solution set Pv as well as the rotations Ri: $Pv \leftarrow Pv \cup \{Ri\}$.

Figure 11 shows an example of a tree, into which three set are $R1=\{d, e, f\}$, $R2=\{b,c\}$ and $R3=\{d, f, c\}$.

The vertex e being a child of the tree, the solution set is (Pe, Me) such that $Pe=\emptyset$ and $Me=\{e\}$.

The vertex f being a child, the solution set is (Pf, Mf) such that $Pf=\emptyset$ and $Mf=\{f\}$.

For the vertex d, the solution set is (Pd, Md) such that $Pd=\{R1\}$ and $Md= \emptyset$.

The vertex b being a child of the tree, the solution set is (Pb, Mb) such that $Pb=\emptyset$ and $Mb=\{b\}$.

For the vertex c, the solution set is (Pd, Md) such that $Pc=\{R1\}$ and $Mc=\{c\}$.

For the vertex a, the solution set if (Pa, Ma) such that $Pa=\{R1, R2\}$ and $Ma= \emptyset$.

The method 200 is optimal, since its result is the largest possible set of subtrees. It is to be noted that the method 200 runs in polynomial time with respect to the size and the number of rotations.

Alternatively, when the graph G has no structure, the method 200 comprises using a heuristic for each Ri in R that contains a Steiner tree Tsi, said Steiner tree comprising a minimal tree that contains all vertices in Ri. Then, the method 200 comprises constructing an intersection graph IG of the Steiner trees, such that the vertices of the graph IG are the trees Tsi, the IG graph comprising an edge between two Steiner trees Tsi, Tsj if they intersect.

The method 200 also comprises finding the largest possible set of vertices of the IG graph that are not pairwise linked by an edge, thanks, preferably, to a maximum independent set problem heuristic solution.

As already explained, the method 1 can apply to maximizing a number of tasks to be performed in parallel on a calculating cluster with a fixed connectivity. Each Ri stands for one of the resources that is needed to perform the task number i, and the graph G stands for the connectivity of the calculating cluster. In other words, the method 1 ensures minimizing the calculation time, since it indicates which tasks can be performed in parallel without competing on communicating links of the cluster.

**Claims**

1. Method for implementing a graph (G) comprising a plurality of vertices (V) and links (E) between the vertices, a set (R) being a collection of subsets (Ri) of said a given number of vertices (Rik) comprising:

   - in said set (R), selecting subsets (Ri, Rj), called pre-selected subsets, such that a tree (Ti, Tj) is associated respectively to said subset (Ri, Rj), said associated trees (Ti, Tj) being pairwise disjoint;
   - comparing the number of vertices (Rik) associated to each of the pre-selected subset;
   - among the pre-selected subsets, choosing the subset for which the number of vertices is the highest.

2. Method according to claim 1, wherein the graph is a tree.

3. Method according to claim 2, comprising depth first research of each tree to select said pre-selected subset.

4. Method according to claim 3, wherein, during the depth first research, a given vertex of one of the tree is visited, a partial solution comprising a set of rotations Ri that we were able to constitute up to the visited vertex and a set of vertices that are still accessible.

5. Method for implementing a quantum circuit comprising a plurality of qubits as well as operators executed on said qubits, said operators comprising a sequence of $\frac{\pi}{4}$ Pauli rotation gates, a surface code layout comprising an arrangement of said quantum circuit on a quantum chip, the arrangement comprising at least a tree with a plurality of subtrees, at each rotation gate corresponding a subtree of the tree, the method comprising:

   - generating iteratively a directed acyclic graph of said quantum circuit, a front layer of the DAG being a set of rotations that can be effectively implemented at each iteration,
   - selecting in said front layer of the DAG a subset, called selected subset, of said set of rotations among subsets, called non intersecting subsets, in which the subtrees are arranged not to intersect by applying the method of implementing a graph according to claims 1 to 4.

6. Method according to claim 5, comprising: removing the selected subset of rotations from the DAG.

7. Method according to claim 5 or 6, comprising: stopping generating the DAG when the front layer is empty.

[Fig. 1]

1

| Selecting pre-selected subsets | 2 |

| Comparing number of vertices of pre-selected subsets | 3 |

| Choosing subset with highest number of vertices | 4 |

# FIG. 1

[Fig. 2]

100

| Preparing QCi | 101 |

| Generating DAG | 103 |

| Extracting rotations | 104 |

| Size strategy | 200 |

| Implementing successive layers in layout code | 102 |

# FIG. 2

[Fig. 3]

**FIG. 3**

[Fig. 4]

**FIG. 4**

[Fig. 5]

FIG. 5

[Fig. 6]

FIG. 6

[Fig. 7]

FIG. 7

[Fig. 8]

FIG. 8

[Fig. 9]

FIG. 9

[Fig. 10]

200

| Picking a root vertex | 202 |

| Choosing one of the leaves of graph G | 201 |

| A depth first search { 204 } | 203 |

# FIG. 10

[Fig. 11]

# FIG. 11

**EUROPEAN SEARCH REPORT**

Europäisches Patentamt
European Patent Office
Office européen des brevets

Application Number

EP 22 30 5305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FANG ZHANG ET AL: "Optimizing T gates in Clifford+T circuit as pi/4 rotations around Paulis", ARXIV.ORG, CORNELL UNIVERSITY LIBRARY, 201 OLIN LIBRARY CORNELL UNIVERSITY ITHACA, NY 14853, 29 March 2019 (2019-03-29), XP081159697, * the whole document * | 1-7 | INV. G06N10/20 G06N10/70 |
| X | VLAD GHEORGHIU ET AL: "A quasi-polynomial time heuristic algorithm for synthesizing T-depth optimal circuits", ARXIV.ORG, CORNELL UNIVERSITY LIBRARY, 201 OLIN LIBRARY CORNELL UNIVERSITY ITHACA, NY 14853, 8 January 2021 (2021-01-08), XP081855267, * the whole document * | 1-7 | |
| A | Yunseong Nam ET AL: "Automated optimization of large quantum circuits with continuous parameters", npj Quantum Information, 1 June 2018 (2018-06-01), pages 1-12, XP055544356, London DOI: 10.1038/s41534-018-0072-4 Retrieved from the Internet: URL:https://arxiv.org/pdf/1710.07345.pdf [retrieved on 2019-01-18] * the whole document * | 1-7 | |

TECHNICAL FIELDS SEARCHED (IPC)

G06N

-/--

The present search report has been drawn up for all claims

| Place of search | Date of completion of the search | Examiner |
|---|---|---|
| The Hague | 23 August 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

**EP 22 30 5305**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BRUGIERE TIMOTHEE GOUBAULT DE ET AL: "Reducing the Depth of Linear Reversible Quantum Circuits", IEEE TRANSACTIONS ON QUANTUM ENGINEERING, IEEE, vol. 2, 7 July 2021 (2021-07-07), pages 1-22, XP011874279, DOI: 10.1109/TQE.2021.3091648 [retrieved on 2021-08-25] * the whole document * | 1-7 | |
| A | DANIEL LITINSKI: "A Game of Surface Codes: Large-Scale Quantum Computing with Lattice Surgery", ARXIV.ORG, CORNELL UNIVERSITY LIBRARY, 201 OLIN LIBRARY CORNELL UNIVERSITY ITHACA, NY 14853, 8 August 2018 (2018-08-08), XP081255132, * the whole document * | 1-7 | |
| A | AUSTIN G. FOWLER ET AL: "Surface codes: Towards practical large-scale quantum computation", PHYSICAL REVIEW A (ATOMIC, MOLECULAR, AND OPTICAL PHYSICS), vol. 86, no. 3, 26 October 2012 (2012-10-26), XP055332246, USA ISSN: 1050-2947, DOI: 10.1103/PhysRevA.86.032324 * the whole document * | 1-7 | **TECHNICAL FIELDS SEARCHED (IPC)** |

The present search report has been drawn up for all claims

| Place of search | Date of completion of the search | Examiner |
|---|---|---|
| The Hague | 23 August 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. LITINSKY.** *A game of surface codes,* 2019